# EUROPEAN PATENT SPECIFICATION

(11) **EP 2 214 296 B1**
(45) Date of publication and mention of the grant of the patent: **25.01.2012**
(21) Application number: 09100091.9
(22) Date of filing: 03.02.2009
(51) Int. Cl.: H02K 29/08, H02K 11/00

(54) **Electronically communated motor assembly**
Elektronisch geschaltetes Motoraggregat
Ensemble moteur à commutation électronique

(43) Date of publication of application: 04.08.2010
(73) Proprietor: ROBERT BOSCH GMBH, 70442 Stuttgart (DE)
(72) Inventor: Baxter, Richard, Suffolk IP14 5UE, Stowmarket (GB); Hoyle, James, Suffolk IP6 8ED, Needham Market (GB)

(56) References cited:
- EP-A1- 1 322 026
- EP-A1- 1 560 319
- EP-A2- 0 952 658
- WO-A1-2007/116956
- WO-A2-2008/015479
- DE-A1- 10 045 596
- DE-A1-102005 046 759
- FR-A1- 2 887 376
- GB-A- 2 345 586
- US-A1- 2002 153 787
- US-A1- 2002 158 542
- US-B1- 6 225 716

## Description

The present invention relates to motors. In particular, the present invention relates to electronically commutated or brushless motors.

In our earlier application, WO2008/015479, we described the use of an electronically commutated (EC) motor in a battery-powered lawnmower. The entire motor and its associated electronics are constructed as a unitary unit. EC motors *per se* are well known and will not be described in detail. An essential part of an EC motor is the use of three Hall effect sensors to detect the position and rotation speed of the rotor, which contains permanent magnets. To do this, the Hall effect sensors need to be very precisely and accurately located between teeth of the stator laminations of the motor and a maximum of 1.8mm from the surface of the rotating magnets of the rotor. The only way of maintaining such positioning in the mechanical environment of a lawnmower is to encase the sensors in potting compound. With a unitary self-contained motor construction, potting compound is also essential to contain and protect the control electronics. This arrangement, which is not unique to lawmnowers, therefore has the great disadvantage that once the motor has been fully assembled and completely embedded in potting compound, no disassembly, repair or fault finding is possible. In the event of a failure, the entire motor and control assembly must be replaced. The present invention seeks to overcome this problem.

EP1560319 describes a motor in accordance with the preamble to claim 1. DE10045596 describes an electronically commutated motor in which the commutation circuit is hermetically sealed.

In its broadest sense, in a first aspect the present invention provides an electronically commutated motor assembly as defined in claim 1.

Preferably, the electronic control unit comprises a primary circuit board providing power and control electronics for the motor; and the at least one Hall effect sensor is mounted on a secondary circuit board. More preferably, the secondary circuit board is mounted at 90° to the primary circuit board.

Preferably, the secondary circuit board has a curvature corresponding substantially to the curvature of the sensor housing.

Preferably, the sensor housing and motor housing aperture include cooperating surfaces substantially providing seal against ingress of foreign matter into the motor housing.

Advantageously, the sensor housing is demountable from the motor housing.

Preferably, the sensor housing has a generally arcuate form having an inner radius of curvature corresponding substantially to an internal radius of curvature of the stator of the motor.

Preferably, the sensor housing is an injection-moulded plastics component. More preferably, the sensor housing has a reduced thickness in an area adjacent the one or more Hall effect sensors. Even more preferably, the reduced thickness is less than or equal to 0.6mm, most preferably between 0.3mm and 0.4mm.

Preferably, the motor housing aperture includes an aperture wall extending towards a top face of the rotor magnets. More preferably, the aperture wall extends to 12mm or less from a top face of the rotor magnets, preferably 8mm or less.

Preferably, the sensor housing is selected to position a front face of each of said at least one Hall effect sensors to be between 0.5mm and 1.8mm from an opposing face of an adjacent rotor magnet, more preferably between 0.7mm and 0.9mm.

In a second aspect, the present invention provides a vegetation cutting apparatus comprising an electronically commutated motor as defined above. Suitably, the vegetation cutting apparatus is a lawncare apparatus, such as a lawnmower, a trimmer or a lawn raker, verticutter or scarifier; or a hedge trimmer or chainsaw.

Preferably, the vegetation cutting apparatus further comprises a battery to power the motor. More preferably, the battery is a rechargeable battery, most preferably a Li-ion battery.

Preferably, the electronic control unit further comprises a battery monitoring circuit to monitor a state of the battery. More preferably, the battery monitoring circuit monitors the temperature and voltage of the battery.

The above and other aspects of the present invention will now be described in further detail, by way of example only, with reference to the accompanying drawings, in which:
- Figure 1: is a partial cross-section of a lawnmower fitted with an embodiment of a motor assembly in accordance with the present invention;
- Figure 2: is a perspective view of the motor assembly of the lawnmower of Figure 1;
- Figure 3: is a side exploded view of the motor of Figure 1;
- Figure 4: is an exploded view of the control unit of the motor assembly of Figure 1, viewed from a first side and slightly above;
- Figure 5: is an exploded view of the control unit of the motor assembly of Figure 1, viewed from a second side and slightly below;
- Figure 6: is a perspective view of the motor cover plate of the motor Figure 3;
- Figure 7: is a partial cross-sectional view of the motor assembly illustrating the location of the sensors with respect to the field pack;
- Figure 8: illustrates, in three views, the interface between the field pack of the motor of Figure 3 and the positioning of the Hall effect sensors of the control unit of Figure 4 within the field pack; and
- Figure 9: shows, in three views, the mounting of the control unit to the motor in the embodiment of Figure 2.

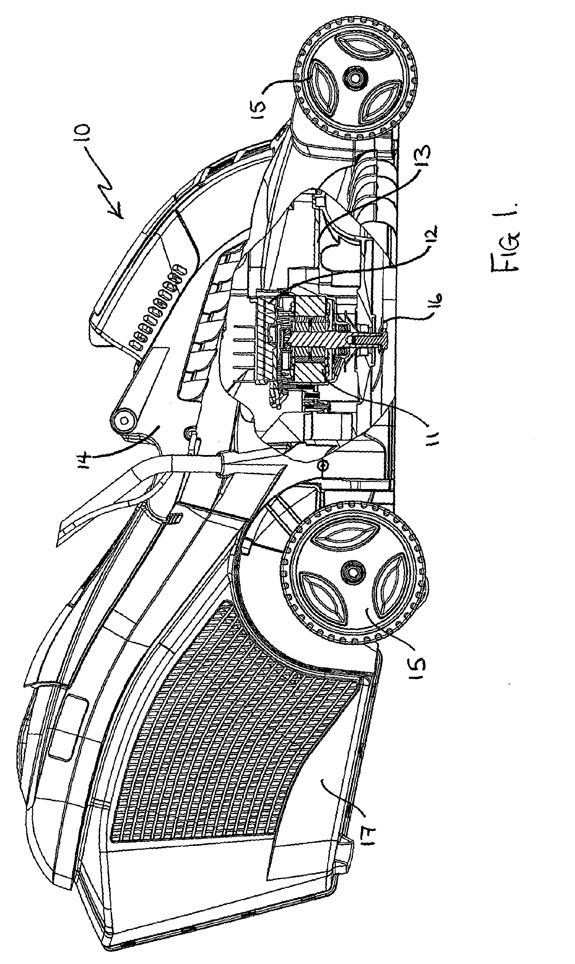

Figure 1 shows a lawnmower 10 of the rotary lawnmower type including an embodiment of a motor assembly in accordance with the present invention comprising a motor 11 and control unit 12 forming an electronically commutated motor. The lawnmower 10 comprises a chassis 13 upon which the motor assembly is supported. Chassis 13 also supports a body 14 and carries axles supporting wheels 15 for engaging the ground, in use. A grass cutting blade 16 is mounted on the drive spindle of motor 11 and the lawnmower 10 includes a grass-collection box 17, for receipt of grass cuttings cut by blade 16 from a lawn. Although described with respect to a lawnmower, it will be appreciated that the present invention is applicable generally to electronically commutated motors. The lawnmower shown is substantially as describe in our earlier application WO2008/015479, to which further reference should be made. The lawnmower motor is powered by a Li-ion battery.

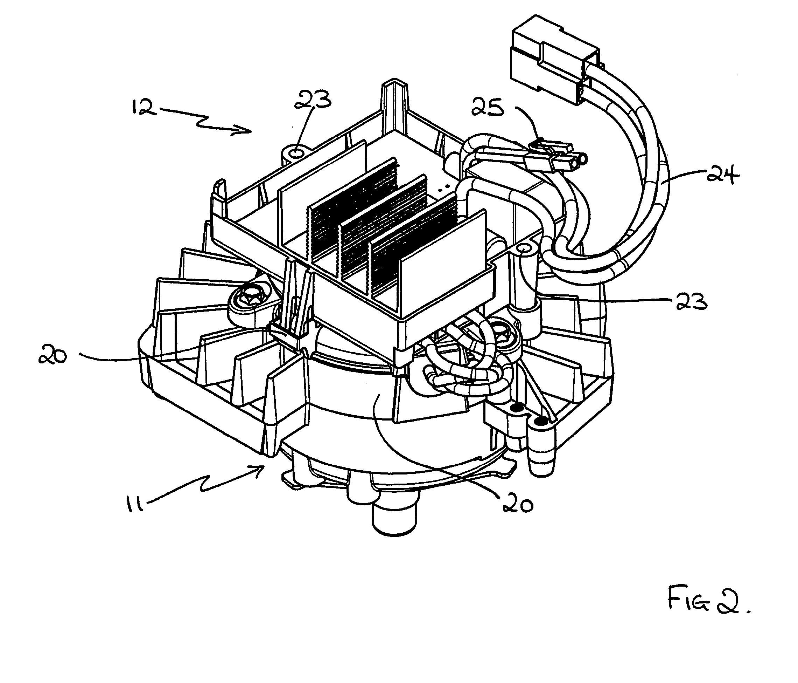

Figure 2 shows the motor assembly of Figure 1 in isolation. The motor assembly comprises motor 11 having a motor housing 20 and control unit 12 having a control unit housing 21 mounted upon motor housing 20 by means of a pair of mating clips 22 (only one shown in Figure 2) together with bolt apertures 23 for receipt of securing bolts or screws (not shown). The motor assembly includes a first fly lead 24 for operative connection to the power supply of the lawnmower, in this case a DC power supply in the form of a battery pack, preferably a Li-ion battery pack (not shown), and a second fly lead 25 for connection to a remote switching unit of the lawnmower, typically mounted on an operator handle of the lawnmower.

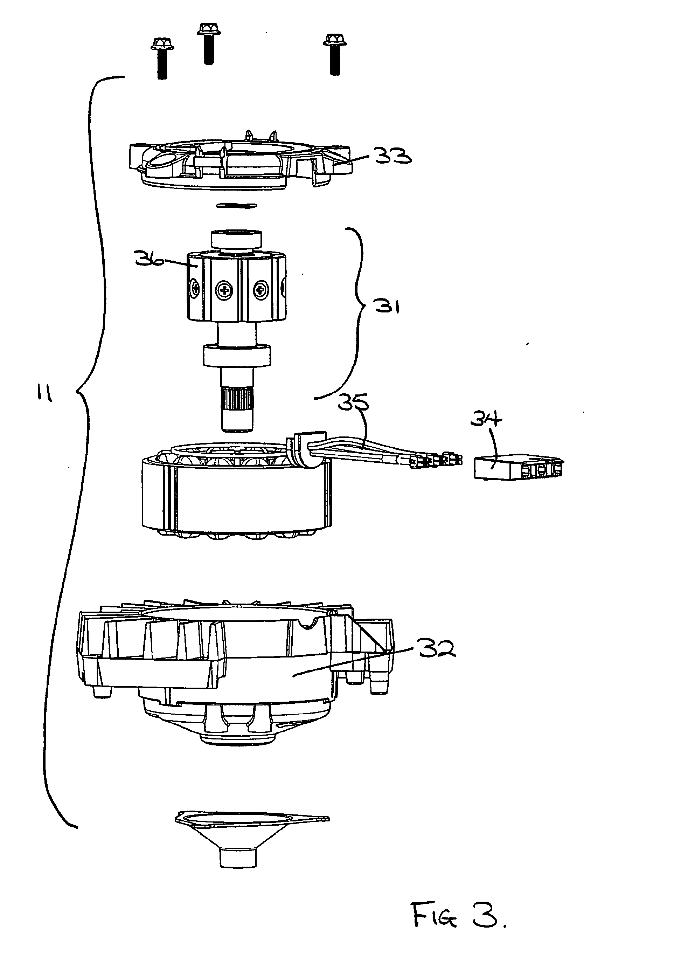

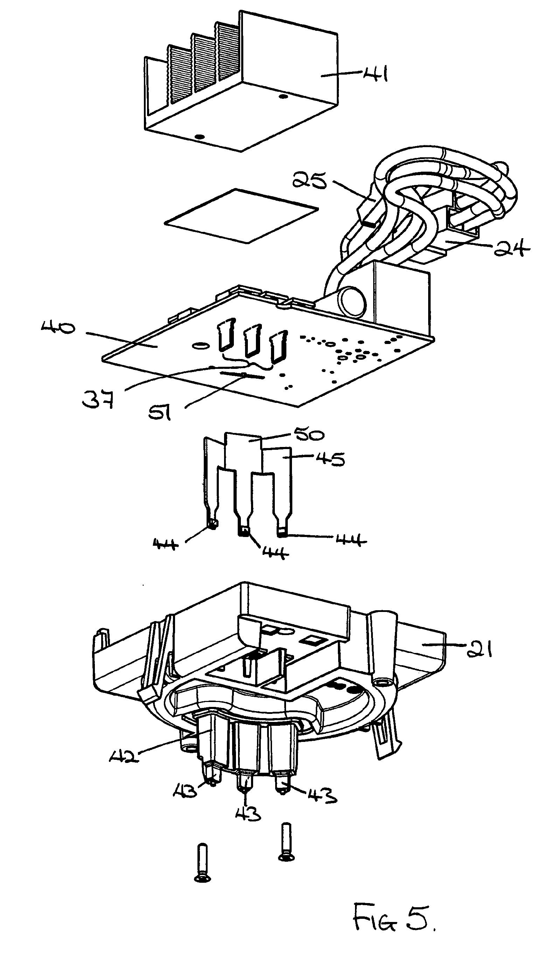

The motor unit 11 is illustrated in Figure 3 and constructed by locating a stator field pack 30 and rotating rotor 31 with its bearings inside a compact aluminium housing comprising motor housing main shell 32 and motor housing cover 33. The terms main shell and cover are used for simplicity and are not to be considered limiting. Other arrangements for the assembly of the housing for the motor will be apparent to the skilled person. The rotor consists of an iron core around the outside of which are mounted a number of permanent high-performance magnets 36. The field pack 30 consists of a conventional multiple lamination onto which a series of copper windings have been wound. Electrical connections to these coils are via a three way female connector 34 on a flying lead 35 which electrically couples to corresponding connectors 37 on the main circuit board 40 (Figure 5). As the field pack 30 does not contain delicate and precisely positioned Hall effect sensors, it is not necessary to encase it in potting compound, in this application.

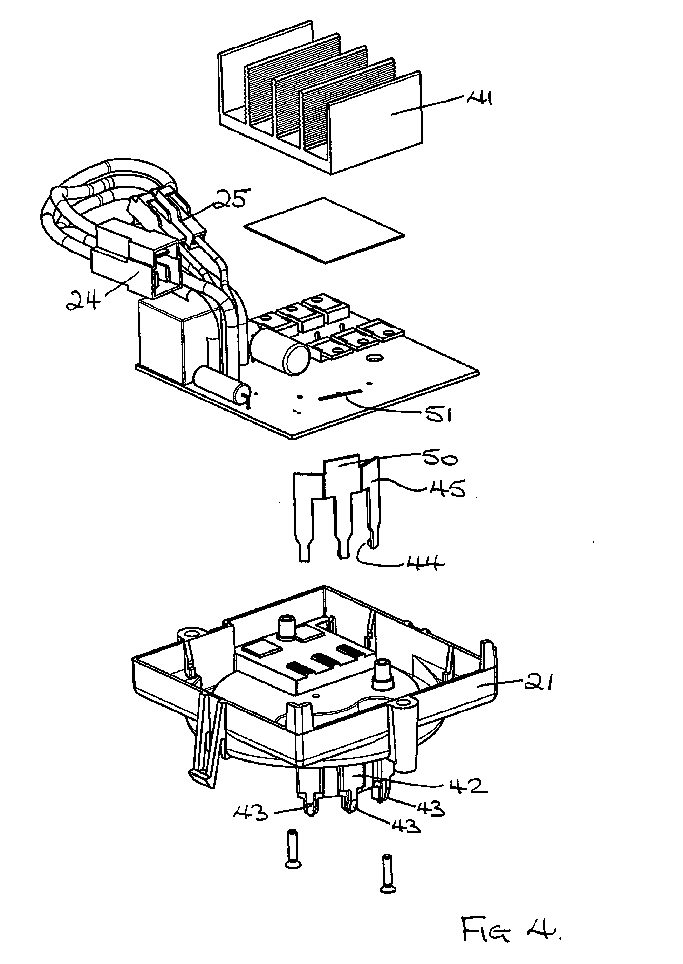

The control unit 12 will now be described in further detail with reference to Figures 4 and 5. The control unit 12 includes a primary circuit board 40 carrying the power and control electronics for the motor, including first and second fly leads 24, 25 described above, with an associated heatsink 41. The control unit housing 21 includes an arcuate sensor housing 42 projecting outwardly therefrom. In the embodiment shown, sensor housing 42 includes three projections or fingers 43. Each projection 43 is associated with a Hall effect sensor as described hereafter.

Advantageously, the control unit 12 incorporates a battery monitoring circuit to monitor the state of the Li-ion battery. The circuit removes power to the motor in the event that a battery condition, such as temperature or voltage, falls outside predefined limits. The battery unit includes appropriate sensors.

In the embodiment shown, the assembly comprises three Hall effect sensors each associated with one of three coil windings incorporated into the stator. Alternative arrangements with fewer or more sensors will be considered appropriate by those skilled in the art.

In the preferred embodiment shown, the Hall effect sensors 44 used to detect the position and rotation speed of the rotor are provided mounted on a secondary circuit board 45. Secondary circuit board 45 is mounted directly on the primary circuit board 40, but at right angles to it. Alternative arrangements will be equally apparent to those skilled in the art having regard to the design requirements and limitations of the intended purpose of the motor assembly. For example, the primary circuit board can be positioned remotely from the secondary circuit board 45 and operatively connected thereto by a flylead. By such an arrangement a 'plug-in sensor pack' can be provided for an EC motor.

In the embodiment shown, secondary circuit board 45 is formed into a curved shape having a curvature selected to match the internal curvature of the field pack. Suitably, curvature is achieved by deep scoring and cracking a single piece of 1mm thick circuit board in two locations and providing copper jumpers to maintain electrical continuity. The curvature of the secondary circuit board 45 is thus represented by three tangents.

Secondary circuit board 45 has a foot 50 which passes through a slot 57, formed in primary circuit board 40, allowing solder pads (not shown) on each board to be linked without the need for wires. In the embodiment shown, there will be five solder pad connections on the secondary circuit board 45, three for data from the sensors 44 and two for power supply to the sensors.

Sensor housing 42 provides a cavity for receipt of secondary circuit board 45. Secondary circuit board 45 is positioned within the sensor housing cavity and may, if desired, be held in place by a small amount of potting compound to ensure resistance to mechanical and environmental influences.

Once secondary circuit board 45 has been electrically connected to primary circuit board 40 and the two elements are assembled within control unit housing 21, the electronics can be secured and protected in the usual manner with potting compound (omitted for clarity), which will fill the control unit housing 21.

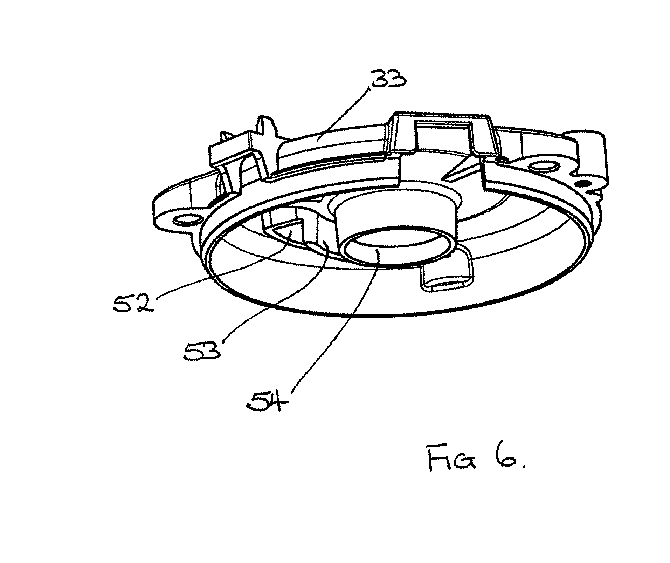

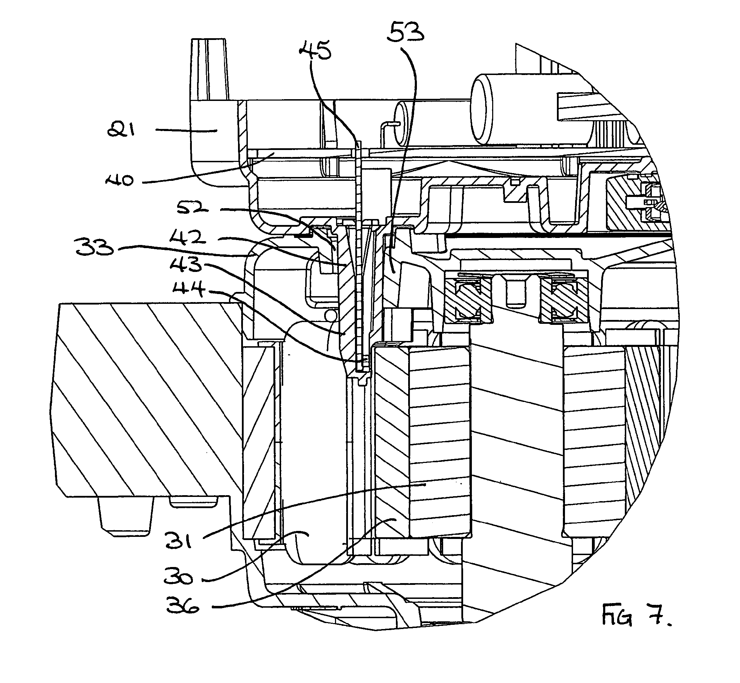

The interoperation between the motor unit 11 and control unit 12 in the assembled motor unit is shown more clearly in Figures 6 and 7. Figure 6 shows motor housing cover 33 and illustrates a sensor aperture 52 through which sensor housing 42 passes and a rotor bearing 54. Aperture 52 includes an aperture wall 53 which aids accurate and secure radial positioning of the sensor housing 42 with respect to the axis of rotation of rotor 31. Advantageously, aperture wall 53 extends towards the field windings to a significant extent. Sensor housing 42 and aperture 52 including aperture wall 53 are mutually dimensioned to provide a close fit, also forming, in the embodiment shown, the primary means of location between the motor unit 11 and control unit 12.

In the embodiment shown, the end of aperture wall 53 extends to within a distance of less than 12mm from the top face of the rotor magnets, preferably 8mm or less, so that only this small length of plastic sensor housing is left unguided by the wall 53. With such dimensions, any distortions of the sensor housing 42 due to temperature fluctuations can be accommodated without loss of function.

Advantageously, as most clearly illustrated in Figure 7, motor housing cover 33 and control unit housing 21 include co-operating male and female surfaces 54, 55. These surfaces help to maintain stiffness of the housing, thereby preventing distortion and controlling the sensor position as close to its desired location as possible. The surfaces 54, 55 respectively close on each other to give a labyrinthine arrangement to reduce ingress of dirt and debris.

It can be seen that the sensor board locates precisely into projections 43 of sensor housing 42 of the control unit housing 21. The Hall effect sensors 44 are surface mounted at the very tip of the secondary circuit board 44 and the sensor housing is moulded to place the sensors 44 themselves closely against the inner surface of the moulding. The moulding itself is locally of reduced thickness, preferably less than 0.6mm, more preferably between 0.3mm and 0.4mm.

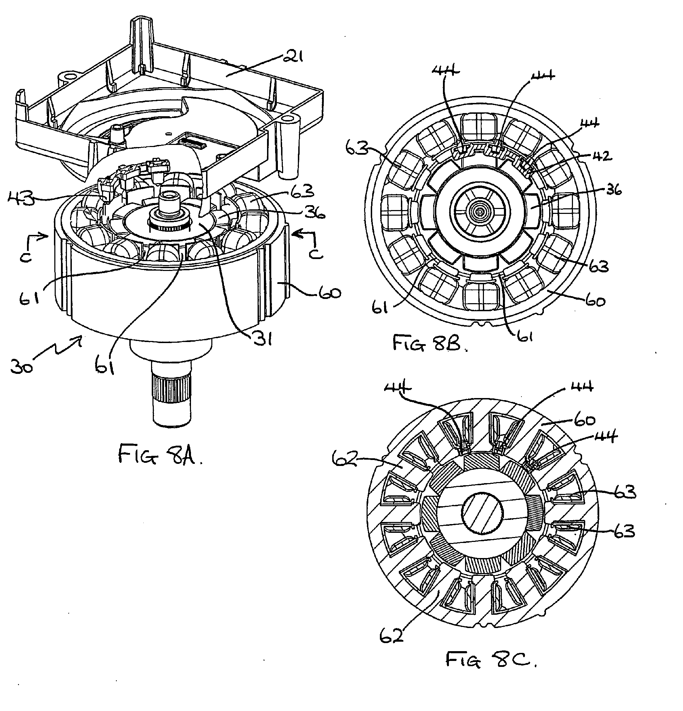

The positioning of the sensors 44 with respect to field pack 30 is illustrated in Figure 8. Figure 8A shows an exploded and part-sectional view of a control unit housing 21 partially inserted into field pack 30. Figure 8B is a sectional view of the assembled control unit housing and field pack taken just above the top of the field pack, showing the inserted sensor housing 42 and a plan view of the field pack. Figure 8C is a cross-section along line C-C in Figure 8A. It can be seen that field pack 30 comprises a stator of generally conventional construction having stator laminations 60 having slots 61 formed therein defining stator teeth 62. Stator windings 63 are formed around stator teeth 62. The precise arrangement of stator windings 63 will be selected by the skilled person having regard to the operational requirements of the motor and will not be discussed in detail here. Suitably, the windings are arranged into three interlinked coils.

As can be most clearly seen in Figure 8C, projections 43 of sensor housing 42 into which sensors 44 are positioned are dimensioned and positioned to be a precise fit in the slots between the teeth of the stator laminations such that the sensors achieve the required proximity to the rotor magnets 36 on the outer surface of rotor 31. This distance should be as short as possible to maximise the sensitivity of the Hall effect sensors 44 to magnetic field variations as rotor 31 rotates. Ideally the distance from the surface of the rotor magnets 36 to the front face of each Hall effect sensor 44 is selected to be between 0.5mm and 1.8mm, preferably between 0.7mm to 0.9mm.

In the embodiment shown, the integral mounting of sensor housing 42 with control unit housing 21 provides a rigid construction which also forms a primary location means between the control unit housing 21 and the motor. In particular, the radial positioning of the sensor housing 42 from the axis of the rotating rotor is assured by the distance from the rotor bearing 54 location in the motor housing cover 33 to the outer face of aperture wall 53 formed in the motor housing cover 33. Preferably, wall 53 extends towards the field windings 63 to a significant extent. The rigid extension element of the control unit housing 21 is provided with corresponding locating features either in the form of ribs or a complete surface.

Advantageously, both the bearing location 54 and the location face of wall 53 of motor housing cover 33 can be machined. Machining enables additional precision to the radial distance of the sensor location from the rotating rotor surface.

The angular location of the control unit housing 21 is determined by the projections 43 of the sensor housing 42 positioning exactly between the poles of the field pack laminations in the slots 61 between teeth 62. As the control unit housing is itself an exact location to the motor housing cover 33, the precise angular positioning of the cover 33 is also determined by the control unit housing/field pack location. The motor housing cover therefore has a circular location to the motor housing main shell 32 and is provided with slots at the fixing points so that these can be finally tightened after the correct angular location has been achieved.

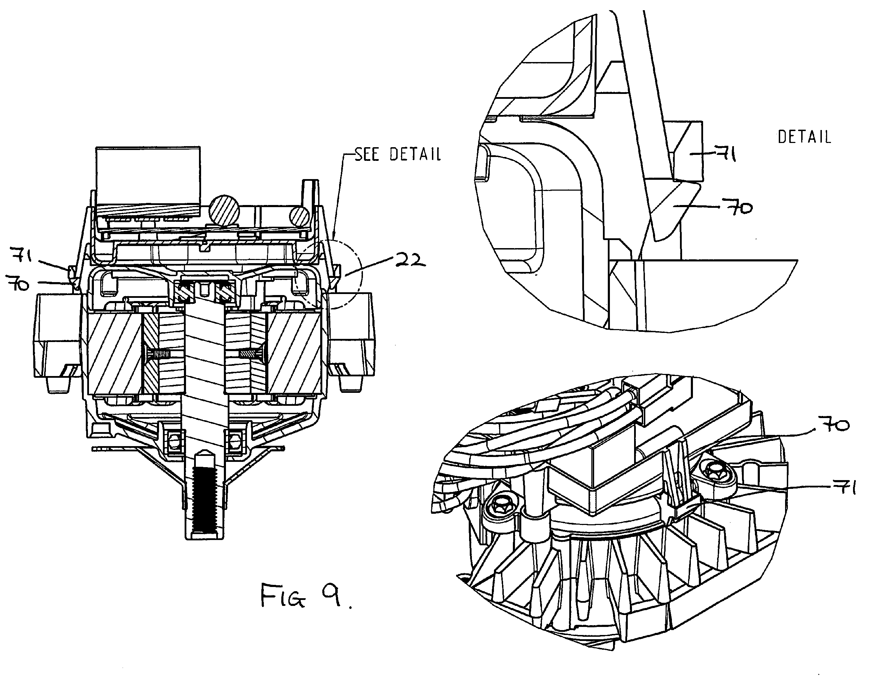

The fixing of the control unit housing 21 to the motor 11 must provide a secure, positive and vibration-resistant location. This can be achieved with conventional screw or bolt fixings or preferably with clip fits 22 (Figure 2), optionally with additional screw or bolt fixings. This is illustrated in Figure 9 in which two male clip elements 70 are integrally formed with the moulding of control unit housing 21, to co-operate with corresponding female surfaces or elements 71 on motor housing cover 31.

The present invention makes it possible for the Hall effect sensors to be produced as a plug-in or detachable unit. Advantageously, in the embodiment shown, the entire control electronics for the apparatus can be provided as a detachable unit. This enables fault finding and repairs to be completed simply and without the necessary costs of replacing the whole motor assembly. The present invention provides integration of the Hall effect sensors with the electronics unit and a means of providing their precise and accurate location into the motor field winding. An additional advantage, particularly in the case of lawn care apparatus, is that the field windings and their connections can then be made sufficiently robust not to require the additional cost and complexity of being embedded in potting compound. A further advantage is the ability to locate the electronics package directly on top of the motor unit so as to produce a compact assembly of ideal proportions for incorporation into a lawnmower while placing the electronics in the natural cooling airflow produced by the blade function.

Although illustrated with respect to a lawnmower, the present invention is equally applicable to use in other apparatus and other fields. For example, the motor is suitable for use in other lawncare apparatus such as lawn rakers, scarifiers and verticutters or line trimmers; or in hedge trimmers and chainsaws.

## Claims

1. An electronically commutated motor assembly comprising a motor (11) comprising: i) a stator comprising stator laminations (60) having slots (61) formed therein defining stator teeth (62) and stator windings (63) comprising a plurality of selectively actuatable coils; and ii) a rotor (31) carrying a plurality of rotor magnets (36), the rotor (31) being rotatable in response to selective activation of the coils; wherein the motor assembly further comprises a motor housing (20) within which the motor (11) is housed, one or more Hall effect sensors (44) positioned in a respective slot (61) between teeth (62) of the stator laminations (60); and an electronic control unit (12); wherein the motor assembly comprises a sensor housing (42) within which said one or more Hall effect sensors 44 are located; wherein the motor housing (20) includes a motor housing aperture (52) **characterized in that** the sensor housing (42) is adapted to engage said motor housing aperture (52) to position said one or more Hall effect sensors (44) in respective slots (61) between the teeth (62) of the stator laminations (60); and **in that** the sensor housing (42) is formed as an element of a control unit housing (21), providing a housing for the electronic control unit (12) for the motor.

2. A motor assembly as claimed in Claim 1 wherein the electronic control unit (12) comprises a primary circuit board (40) providing power and control electronics for the motor; and the at least one Hall effect sensor (44) is mounted on a secondary circuit board (45).

3. A motor assembly as claimed in Claim 2 wherein the secondary circuit board (45) is mounted at 90° to the primary circuit board (40).

4. A motor assembly as claimed in Claim 2 or Claim 3 wherein the secondary circuit board (45) has a curvature corresponding substantially to the curvature of the sensor housing (42).

5. A motor assembly as claimed in any preceding claim wherein the sensor housing (42) and motor housing aperture (52) include cooperating surfaces substantially providing a seal against ingress of foreign matter into the motor housing (20).

6. A motor assembly as claimed in any preceding claim wherein the sensor housing (42) is demountable from the motor housing (20).

7. A motor assembly as claimed in any preceding claim, wherein the sensor housing (42) has a generally arcuate form having an inner radius of curvature corresponding substantially to an inner radius of curvature of the stator.

8. A motor assembly as claimed in any preceding claim wherein the sensor housing (42) is an injection-moulded plastics component.

9. A motor assembly as claimed in any preceding claim wherein the motor housing aperture (52) includes an aperture wall (53) extending towards a top face of the rotor magnets.

10. A motor assembly as claimed in Claim 9 wherein the aperture wall (53) extends to 12mm or less from a top face of the rotor magnets (36), preferably 8mm or less.

11. A motor assembly as claimed in any preceding claim wherein the sensor housing (42) is selected to position a front face of each of said at least one Hall effect sensors (44) to be between 0.5mm and 1.8mm from an opposing face of an adjacent rotor magnet (36), preferably between 0.7mm and 0.9mm.

12. A vegetation cutting apparatus comprising a motor assembly as claimed in any preceding claim.

13. A vegetation cutting apparatus as claimed in claim 12 in the form of a lawnmower (10), a line trimmer, a lawn raker, a lawn scarifier, a verticutter apparatus; a hedge trimmer or a chainsaw.

14. A vegetation cutting apparatus as claimed in claim 12 or claim 13 further comprising a battery for powering the motor; preferably a rechargeable battery; more preferably a Li-ion battery

## Patentansprüche

1. Elektronisch geschaltete Motoranordnung mit einem Motor (11), der Folgendes umfasst: i) einen Stator mit Statorlamellen (60), die darin ausgebildete Schlitze (61) zum Definieren von Statorzähnen (62) aufweisen, und Statorwicklungen (63), die mehrere wahlweise betätigbare Spulen umfassen; und ii) einen Rotor (31), der mehrere Rotormagnete (36) trägt, wobei der Rotor (31) in Reaktion auf eine wahlweise Aktivierung der Spulen gedreht werden kann; wobei die Motoranordnung des Weiteren ein Motorgehäuse (20), in dem der Motor (11) aufgenommen ist, einen oder mehrere Halleffektsensoren (44), die in einem jeweiligen Schlitz (61) zwischen Zähnen (62) der Statorlamellen (60) positioniert sind; und eine elektronische Steuereinheit (12) umfasst; wobei die Motoranordnung ein Sensorgehäuse (42), in dem der eine oder die mehreren Halleffektsensoren (44) angeordnet sind, umfasst; wobei das Motorgehäuse (20) eine Motorgehäuseöffnung (52) enthält, **dadurch gekennzeichnet, dass** das Sensorgehäuse (42) eingerichtet ist, um an der Motorgehäuseöffnung (52) in Eingriff zu gelangen, um den einen oder die mehreren Halleffektsensoren (44) in entsprechenden Schlitzen (61) zwischen den Zähnen (62) der Statorlamellen (60) zu positionieren; und dass das Sensorgehäuse (42) als ein Element eines Steuereinheitgehäuses (21) gebildet ist, das ein Gehäuse für die elektronische Steuereinheit (12) für den Motor darstellt.

2. Motoranordnung nach Anspruch 1, wobei die elektronische Steuereinheit (12) eine Hauptleiterplatte (40) umfasst, die die Leistungs- und Steuerelektronik für den Motor bereitstellt; und der wenigstens eine Halleffektsensor (44) auf einer Hilfsleiterplatte (45) angebracht ist.

3. Motoranordnung nach Anspruch 2, wobei die Hilfsleiterplatte (45) unter einem Winkel von 90° zur Hauptleiterplatte (40) angebracht ist.

4. Motoranordnung nach Anspruch 2 oder Anspruch 3, wobei die Hilfsleiterplatte (45) eine Krümmung aufweist, die im Wesentlichen der Krümmung des Sensorgehäuses (42) entspricht.

5. Motoranordnung nach einem vorhergehenden Anspruch, wobei das Sensorgehäuse (42) und die Motorgehäuseöffnung (52) zusammenwirkende Oberflächen enthalten, die im Wesentlichen eine Dichtung gegen das Eintreten von Fremdstoffen in das Motorgehäuse (20) schaffen.

6. Motoranordnung nach einem vorhergehenden Anspruch, wobei das Sensorgehäuse (42) von dem Motorgehäuse (20) abnehmbar ist.

7. Motoranordnung nach einem vorhergehenden Anspruch, wobei das Sensorgehäuse (42) eine im Allgemeinen gebogene Form mit einem inneren Krümmungsradius, der im Wesentlichen einem inneren Krümmungsradius des Stators entspricht, aufweist.

8. Motoranordnung nach einem vorhergehenden Anspruch, wobei das Sensorgehäuse (42) eine durch Spritzgießen gebildete Kunststoffkomponente ist.

9. Motoranordnung nach einem vorhergehenden Anspruch, wobei die Motorgehäuseöffnung (52) eine Öffnungswand (53) enthält, die sich in Richtung zu einer oberen Fläche der Rotormagnete erstreckt.

10. Motoranordnung nach Anspruch 9, wobei sich die Öffnungswand (53) bis zu einem Abstand von 12 mm oder kleiner von einer oberen Fläche der Rotormagnete (36) erstreckt, wobei der Abstand vorzugsweise 8 mm oder kleiner ist.

11. Motoranordnung nach einem vorhergehenden Anspruch, wobei das Sensorgehäuse (42) ausgewählt ist, um eine vordere Fläche jedes des wenigstens einen Halleffektsensors (44) in der Weise zu positionieren, dass sie sich in einem Abstand zwischen 0,5 mm und 1,8 mm zu einer gegenüberliegenden Fläche eines benachbarten Rotormagnets (36) befindet, wobei der Abstand vorzugsweise zwischen 0,7 mm und 0,9 mm liegt.

12. Vegetationsschneidvorrichtung, die eine Motoranordnung nach einem vorhergehenden Anspruch umfasst.

13. Vegetationsschneidvorrichtung nach Anspruch 12 in Form eines Rasenmähers (10), eines Kantenschneiders, eines Rasenbesens, eines Rasenvertikutierers, einer Vertikutiervorrichtung; eines Heckentrimmers oder einer Kettensäge.

14. Vegetationsschneidvorrichtung nach Anspruch 12 oder Anspruch 13, die ferner Folgendes umfasst: eine Batterie zum Antreiben des Motors, wobei eine wiederaufladbare Batterie bevorzugt ist; wobei eine Li-Ionen-Batterie stärker bevorzugt ist.

## Revendications

1. Ensemble moteur à commutation électronique comprenant un moteur (11) comprenant : i) un stator comprenant des tôles de stator (60) ayant des fentes (61) formées dans celles-ci, définissant des dents de stator (62) et des enroulements de stator (63) comprenant une pluralité de bobines pouvant être actionnées de manière sélective ; et ii) un rotor (31) portant une pluralité d'aimants de rotor (36), le rotor (31) pouvant tourner en réponse à l'activation sélective des bobines ; l'ensemble moteur comprenant en outre un boîtier de moteur (20) dans lequel le moteur (11) est logé, un ou plusieurs capteurs à effet de Hall (44) positionnés dans une fente respective (61) entre les dents (62) des tôles de stator (60) ; et une unité de commande électronique (12) ; l'ensemble moteur comprenant un boîtier de capteur (42) dans lequel lesdits un ou plusieurs capteurs à effet de Hall (44) sont logés ; le boîtier de moteur (20) comportant une ouverture de boîtier de moteur (52), **caractérisé en ce que** le boîtier de capteur (42) est prévu pour s'engager avec ladite ouverture de boîtier de moteur (52) pour positionner lesdits un ou plusieurs capteurs à effet de Hall (44) dans des fentes respectives (61) entre les dents (62) des tôles de stator (60) ; ; et **en ce que** le boîtier de capteur (42) est formé en tant qu'élément d'un boîtier d'unité de commande (21), fournissant un boîtier pour l'unité de commande électronique (12) pour le moteur.

2. Ensemble moteur selon la revendication 1, dans lequel l'unité de commande électronique (12) comprend une carte à circuits imprimés primaire (40) fournissant de la puissance et une électronique de commande pour le moteur, et l'au moins un capteur à effet de Hall (44) est monté sur une carte à circuits imprimés secondaire (45).

3. Ensemble moteur selon la revendication 2, dans lequel la carte à circuits imprimés secondaire (45) est montée à 90° par rapport à la carte à circuits imprimés primaire (40).

4. Ensemble moteur selon la revendication 2 ou la revendication 3, dans lequel la carte à circuits imprimés secondaire (45) a une courbure correspondant substantiellement à la courbure du boîtier de capteur (42).

5. Ensemble moteur selon l'une quelconque des revendications précédentes, dans lequel le boîtier de capteur (42) et l'ouverture de boîtier de moteur (52) comportent des surfaces coopérantes assurant substantiellement un joint contre la pénétration de corps étrangers dans le boîtier de moteur (20).

6. Ensemble moteur selon l'une quelconque des revendications précédentes, dans lequel le boîtier de capteur (42) peut être démonté du boîtier de moteur (20).

7. Ensemble moteur selon l'une quelconque des revendications précédentes, dans lequel le boîtier de capteur (42) a une forme généralement arquée ayant un rayon de courbure interne correspondant substantiellement à un rayon de courbure interne du stator.

8. Ensemble moteur selon l'une quelconque des revendications précédentes, dans lequel le boîtier de capteur (42) est un composant en plastique moulé par injection.

9. Ensemble moteur selon l'une quelconque des revendications précédentes, dans lequel l'ouverture de boîtier de moteur (52) comporte une paroi d'ouverture (53) s'étendant vers une face supérieure des aimants du rotor.

10. Ensemble moteur selon la revendication 9, dans lequel la paroi d'ouverture (53) s'étend jusqu'à 12 mm ou moins d'une face supérieure des aimants de rotor (36), de préférence jusqu'à 8 mm ou moins.

11. Ensemble moteur selon l'une quelconque des revendications précédentes, dans lequel le boîtier de capteur (42) est choisi de manière à positionner une face avant de chacun desdits au moins un capteur à effet de Hall (44) de manière à ce qu'elle soit à une distance comprise entre 0,5 mm et 1,8 mm d'une face opposée d'un aimant de rotor adjacent (36), de préférence entre 0,7 mm et 0,9 mm.

12. Appareil pour couper de la végétation, comprenant un ensemble moteur selon l'une quelconque des revendications précédentes.

13. Appareil pour couper de la végétation selon la revendication 12, sous la forme d'une tondeuse à gazon (10), d'un taille-bordures, d'un déchaumeur pour pelouse, d'un scarificateur, d'une débroussailleuse; d'un taille-haie ou d'une tronçonneuse.

14. Appareil pour couper de la végétation selon la revendication 12 ou la revendication 13, comprenant en outre une batterie pour alimenter le moteur ; de préférence une batterie rechargeable, plus préférablement une batterie aux ions Li.
